# EUROPÄISCHE PATENTSCHRIFT

(11) **EP 3 209 890 B1**
(45) Veröffentlichungstag und Bekanntmachung des Hinweises auf die Patenterteilung: **09.10.2019**
(21) Anmeldenummer: 15775090.2
(22) Anmeldetag: 06.10.2015
(51) Int. Cl.: F16B 13/08

(54) **KIPPDÜBEL**
TOGGLE FASTENER
CHEVILLE À BASCULE

(30) Priorität: 24.10.2014 DE 102014015685; 13.08.2015 DE 102015113332
(43) Veröffentlichungstag der Anmeldung: 30.08.2017
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2015/001956
(87) Internationale Veröffentlichungsnummer: WO 2016/062373

(56) Entgegenhaltungen:
- WO-A1-2004/079209
- CA-A1- 2 502 044
- DE-A1- 2 721 768
- DE-A1-102009 006 542
- DE-U1- 29 618 192
- US-A1- 2009 169 331
- US-A1- 2012 045 292

## Beschreibung

Die Erfindung betrifft einen Kippdübel mit den Merkmalen des Oberbegriffs des Anspruchs 1.

Das Dokument WO 2004/079209 A1 zeigt einen Dübel aus dem Stand der Technik.

Aus der Druckschrift DE 1 121 792 ist ein Kippdübel bekannt, der zum Befestigen eines Gegenstandes, beispielsweise einer Lampe, an einem dünnwandigen Bauteil, beispielsweise eine Gipskartonplatte an einer Decke, geeignet ist. Der Kippdübel weist dazu einen Balken auf, durch den sich quer eine Gewindebohrung erstreckt. Außerdem steht im Bereich der Gewindebohrung seitlich einstückig ein Band ab. Nach dem Bohren eines Lochs im dünnwandigen Bauteil wird der Kippdübel mit einem Ende voraus durch das Loch geschoben, wobei das Band derart zur Seite gebogen wird, dass es seitlich am Balken anliegt. Sobald der Balken vollständig das Loch passiert hat, kann er gekippt werden, so dass er mit einer Tragseite an der Rückseite des Bauteils zur Anlage kommt. Die Kippbewegung wird durch ein Ziehen am Band bewirkt. Gleichzeitig wird sichergestellt, dass die Gewindebohrung mit dem Loch fluchtet, so dass eine Schraube eingedreht werden kann. Mit dieser Schraube kann der Gegenstand an der dem Bediener zugewandten Vorderseite befestigt werden. Sollte der Bediener beim Bohren des Lochs unerwartet keinen Hohlraum hinter dem dünnwandigen Bauteil erreichen, beispielsweise weil sich eine Lattung als Unterkonstruktion in diesem Bereich befindet, so kann der bekannte Kippdübel nicht eingesetzt werden.

Aufgabe der Erfindung ist es, einen Kippdübel zu schaffen, der auch dann verwendbar ist, wenn sich kein Hohlraum hinter dem dünnwandigen Bauteil als Befestigungsgrund befindet.

Diese Aufgabe wird erfindungsgemäß durch die Merkmale des Anspruchs 1 gelöst. Der erfindungsgemäße Kippdübel zur Befestigung eines Gegenstandes an einem dünnwandigen Bauteil weist einen Balken auf, der sich entlang einer Balkenlängsachse erstreckt und eine Öffnung zur Aufnahme einer Schraube aufweist. Die Öffnung kann eine Gewindebohrung sein, muss jedoch kein Gewinde aufweisen und auch nicht zylindrisch sein, insbesondere wenn eine Schraube selbstschneidend in die Öffnung eingeschraubt werden soll. Um eine selbstschneidende Schraube gut aufnehmen zu können, kann die Öffnung längs der Öffnungslängsachse verlaufende Rippen aufweisen. Die Öffnung ist insbesondere ein Durchgangsloch, kann aber auch als Sackloch, beispielsweise mit einer leicht durchdringbaren Restwand, ausgeführt sein. Eine Öffnungslängsachse verläuft quer zur Balkenlängsachse, so dass eine Schraube bei gekipptem Balken quer durch den Balken geschraubt werden kann. Mit dem Balken ist ein Band verbunden, das zum Halten und zur Positionierung des Balkens bei der Montage dient. Die Verbindung zwischen Balken und Band kann einstückig sein, möglich ist beispielsweise aber auch eine Klipsverbindung. Insbesondere ist die Verbindung als Drehlager ausgebildet, so dass das Band gegenüber dem Balken verschwenkt werden kann. Auf der dem Band zugewandten Seite bildet der Balken eine Tragseite.

Erfindungsgemäß weist der Balken des Kippdübels einen Schraubkanal auf, der sich entlang einer Kanallängsachse erstreckt, die im Wesentlichen parallel zur Balkenlängsachse steht. Hierdurch kann der Kippdübel beispielsweise auch dann verwendet werden, wenn hinter dem dünnwandigen Bauteil überaschenderweise kein Hohlraum besteht, sondern eine Lattung. In diesem Fall kann das Loch bis in die Lattung gebohrt und der Kippdübel in das Loch eingeführt werden. Als "Loch" ist hier stets das Loch gemeint, das zur Befestigung in das dünnwandige Bauteil gebohrt wird und durch das der Balken zur Befestigung eingeschoben wird. Besteht kein Hohlraum hinter dem dünnwandigen Bauteil, wird der Kippdübel nicht gekippt, sondern verbleibt im Loch und es kann eine Schraube zur Befestigung eines Gegenstandes in den Schraubkanal eingetrieben, also insbesondere eingeschraubt werden. Der Balken kann bereits ohne Verformung durch bloße Reibung in einem engen Loch Halt finden. Der Schraubkanal und die Schraube sind jedoch erfindungsgemäß derart gestaltet, dass es durch das Eintreiben der Schraube in den Schraubkanal zu einem Verspreizen des Balkens kommt. "Verspreizen" bedeutet insbesondere eine Aufweitung senkrecht zur Balkenlängsachse. Der Kippdübel funktioniert in diesem Fall also nicht durch Kippen sondern ähnlich einem Spreizdübel durch Verspreizen. Das Verspreizen erfolgt dabei insbesondere entweder parallel zur Öffnungslängsachse oder senkrecht hierzu oder in beide Richtungen.

Der Schraubkanal muss sich nicht über die gesamte Länge des Balkens erstrecken, vorzugsweise erstreckt er sich jedoch über mindestens ein Fünftel, insbesondere mindestens ein Drittel der Längserstreckung des Balkens, so dass eine selbstbohrende Schraube ausreichend Halt findet, und bevorzugt über die ganze Länge des Balkens, so dass auch längere Schrauben leicht vollständig eingeschraubt werden können.

Vorzugsweise verengt sich der Schraubkanal in einer Richtung und zwar in Eintreibrichtung der Schraube. Diese ist dadurch leicht einführbar und wird bei geringem Drehmoment zunächst zentriert. Dringt sie bis in den engeren Teil des Schraubkanals vor, so sorgt sie dort für eine starke Verspreizung.

Das Verspreizen wird außerdem vorzugsweise dadurch erleichtert, dass der Balken einen Schlitz aufweist, der im Wesentlichen parallel zur Balkenlängsachse verläuft. Ist der Schraubkanal im Verhältnis zur Schraube relativ eng und der Schlitz so angeordnet, dass der Balken am Anfang des Eintreibens der Schraube in den Schraubkanal leicht und weit aufspreizt, so wird außerdem verhindert, dass der Kippdübel im Loch mitdreht, da der gespreizte Balken eine Mitdrehsicherung bildet.

Vorzugsweise besteht der Balken aus mindestens zwei Komponenten. Dabei sind die zwei Komponenten insbesondere als zwei unterschiedliche Bauteile und/oder Werkstoffe zu verstehen. Es kann sich aber beispielsweise auch um zwei gleiche Werkstoffe handeln, die lediglich durch eine Phasengrenze getrennt sind, wie dies durch ZweiKomponenten-Spritzgießen erzeugbar ist. Durch die Verwendung von zwei Komponenten kann der Balken bezüglich der Lastübertragung von einer in den Balken eingeschraubten Schraube auf das jeweilige dünnwandige Bauteil angepasst werden. So können insbesondere Bereiche, die zur Verteilung der Last innerhalb des Balkens besonders steif ausgeführt sein sollen, durch eine erste Komponente mit einer günstigen Kombination aus Querschnitt und Werkstoffwahl gebildet werden, während Bereiche, die zur unmittelbaren Übertragung auf das dünnwandige Bauteil dienen, besonders elastisch und/oder flächig ausgebildet werden, um Spannungsspitzen im Bereich der Oberfläche des dünnwandigen Bauteils zu vermeiden.

Vorzugsweise bildet eine erste Komponente des Balkens einen Tragkörper und eine zweite Komponente einen Anlagekörper. Hierdurch kann die erste Komponente bezüglich ihrer Geometrie und bezüglich des Werkstoffs auf eine möglichst hohe Steifigkeit ausgerichtet werden. Der Tragkörper erstreckt sich insbesondere über mindestens die Hälfte der Länge des Balkens, vorzugsweise über mindestens 75 Prozent der Länge, um die Last innerhalb des Balkens zu verteilen. Der Anlagekörper ist im Bereich der Tragseite angeordnet und dient der flächigen Anlage am dünnwandigen Bauteil, wobei insbesondere die Anlage an einer dem Bediener abgewandten Rückseite des dünnwandigen Bauteils gemeint ist. Der Anlagekörper kann hierdurch derart in Gestalt und Werkstoff ausgerichtet werden, dass es zu einer möglichst guten Verteilung der wirkenden Kräfte unter Vermeidung von Spannungsspitzen kommt.

In einer bevorzugten Ausführungsform ist die den Tragkörper bildende erste Komponente härter als die den Anlagekörper bildende zweite Komponente. Die Wahl derartiger Werkstoffe begünstig die Wahrnehmung der jeweiligen Funktionen, wobei zusätzlich zur Werkstoffwahl insbesondere die geometrische Gestaltung hierzu beiträgt. Insbesondere ist der Tragkörper aus Stahl oder aus einem glasfaserverstärkten Kunstoff mit einem Faseranteil von mindestens 15 Gewichtsprozent, insbesondere mindestens 30 Gewichtsprozent und vorzugsweise mindestens 50 Gewichtsprozent.

In einer bevorzugten Ausführungsform wird der Schraubkanal zumindest teilweise vom Anlagekörper gebildet. Insbesondere wenn die Schraube zum Aufspreizen des Balkens führt und der Anlagekörper durch Materialwahl und/oder Geometriewahl leichter verformbar ist als der Tragkörper, führt dies dazu, dass sich der Anlagekörper besonders gut an die Wandung des Lochs anlegt. Hierdurch kommt es zu einem besonders guten Halt im Loch.

Vorzugsweise ist der Schraubkanal zwischen dem Anlagekörper und dem Tragkörper angeordnet. Damit kann der Balken leicht an der Grenze zwischen Anlagekörper und Tragkörper verspreizt werden, also insbesondere Anlagekörper und Tragkörper in entgegengesetzte Richtungen bewegt werden, ohne dass es zu einer Verformung innerhalb von Anlagekörper oder Tragkörper kommen muss. Der Kippdübel kann somit mit relativ niedrigem Drehmoment gut verspreizt werden.

Der Anlagekörper steht vorzugsweise zumindest in den äußeren beiden Dritteln der Längserstreckung des Balkens in Richtung der Öffnungslängsachse auf der Tragseite über den Tragkörper über. Hierdurch kommt es dort, wo die Last vom Balken auf das dünnwandige Bauteil übertragen wird, nämlich vorzugsweise an den beiden Enden des Balkens und weniger in der Mitte des Balkens, zu einer Anlage des flächigen Anlagekörpers, wenn der Balken auf der Rückseite des dünnwandigen Bauteils anliegt.

Der Anlagekörper besteht vorzugsweise aus mindestens zwei Teilen, insbesondere aus zwei Hälften. Dies ermöglicht einerseits, dass eine Beweglichkeit innerhalb des Anlagekörpers und damit eine Spreizbarkeit erreichbar ist. Andererseits kann bei einem Tragkörper, der einen U-förmigen Querschnitt aufweist, jeweils ein Teil, beziehungsweise eine Hälfte, einem Schenkel des Tragkörpers zugeordnet werden, wobei nur wenig Material verwendet werden muss. Ein Tragkörper mit einem zumindest abschnittsweise U-förmigen Querschnitt hat sich als besonders steif herausgestellt. Insbesondere, wenn der Tragkörper aus Metall ist, kann er besonders einfach als Biegeteil mit einem U-förmigen Querschnitt hergestellt werden. "Hälften" meint hier eine ungefähre, nicht unbedingt exakt hälftige Teilung von Volumen und/oder Gewicht. Die Häflten sind inbesondere im Wesentlichen spiegelsymmetrisch.

Vorzugsweise sind die beiden Teile, insbesondere Hälften, des Anlagekörpers in einer Richtung quer zur Balkenlängsachse zueinander beweglich, insbesondere derart, dass der Balken in einer Abmessung quer zur Balkenlängsachse verringert werden kann. Der Anlagekörper kann damit so gestaltet werden, dass er beim Durchstecken durch das Loch schmal ist, während er nach einem Kippen durch ein Auseinanderbewegen der beiden Hälften die Last auf eine große Fläche verteilen kann. Die Bewegung auseinander wird vorzugsweise durch ein Federelement, das die beiden Teile inbesondere einstückig miteinander verbindet, bewirkt. Alternativ könnte das Einschrauben der Schraube in die Öffnung die Bewegung bewirken. Die Beweglichkeit der beiden Teile hat außerdem den Vorteil, dass diese leicht durch Eintreiben einer Schraube in Längsrichtung des Balkens, also parallel zur Balkenlängsachse, gespreizt werden können. Hierdurch kann der Kippdübel beispielsweise auch dann verwendet werden, wenn hinter dem dünnwandigen Bauteil überraschenderweise kein Hohlraum besteht, sondern beispielsweise eine Lattung. In diesem Fall kann das Loch bis in die Lattung gebohrt und der Kippdübel in das Loch eingeführt werden. Dabei werden insbesondere die beiden Hälften zusammengedrückt. Durch Eintreiben einer Schraube zur Befestigung eines Gegenstandes werden die beiden Teile des Anlagekörpers dann verspreizt und der Kippdübel verspreizt. Der Kippdübel funktioniert in diesem Fall also nicht durch Kippen, sondern ähnlich einem Spreizdübel durch Verspreizen.

Vorzugsweise weist zumindest ein Ende des Balkens eine Einführschräge auf. Dies erleichtert das Einführen in das Loch. Insbesondere wenn der Balken zum Durchdringen etwas quer zur Balkenlängsachse gestaucht werden muss, wie dies bei einem Anlagekörper mit zwei Hälften der Fall sein kann, dient die Einführschräge dem leichteren Einführen.

Die Erfindung wird nachfolgend anhand zweier Ausführungsbeispiele erläutert.

Es zeigen:
- Figur 1: ein erstes Ausführungsbeispiel in einer perspektivischen Ansicht von der Seite;
- Figur 2: dasselbe Ausführungsbeispiel ohne Band in einer Seitenansicht gemäß Pfeil II in Figur 1;
- Figur 3: den Anlagekörper des ersten Ausführungsbeispiels in einer perspektivischen Ansicht;
- Figur 4: denselben Anlagekörper in einer weiteren perspektivischen Ansicht;
- Figur 5: denselben Anlagekörper in einer Draufsicht von unten;
- Figur 6: das erste Ausführungsbeispiel während der Montage an einem dünnwandigen Bauteil in einer perspektivischen Schnittdarstellung;
- Figur 7: dasselbe Ausführungsbeispiel ohne Band in einer Ansicht wie Figur 2 beim Einführen des Balkens in ein Loch;
- Figur 8: ein zweites Ausführungsbeispiel in einer perspektivischen Ansicht;
- Figur 9: dasselbe Ausführungsbeispiel in einer perspektivischen Schnittdarstellung; und
- Figur 10: dasselbe Ausführungsbeispiel während der Montage an einem dünnwandigen Bauteil in einer Schnittdarstellung.

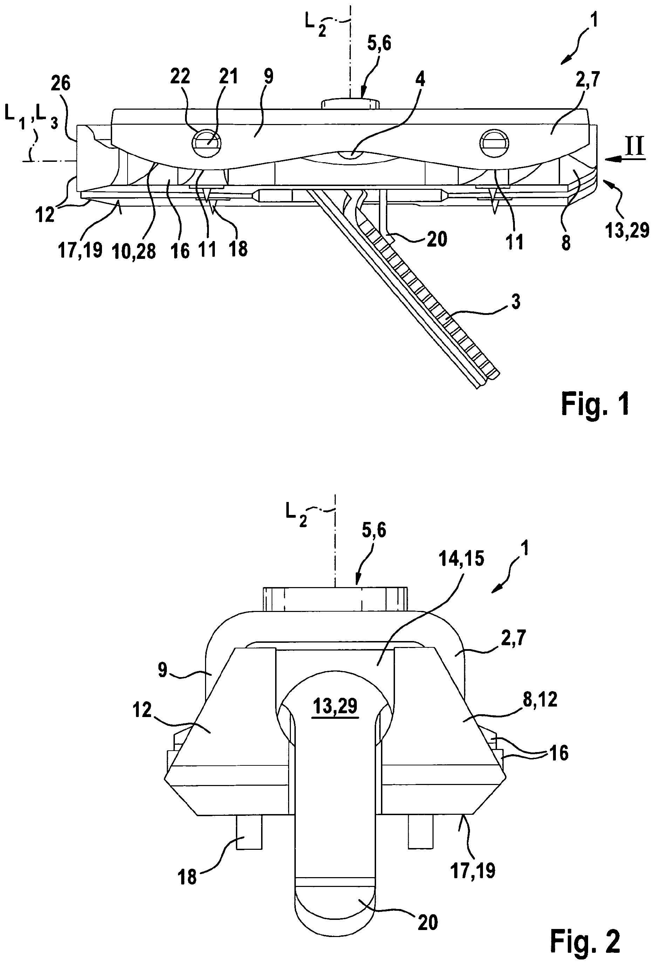

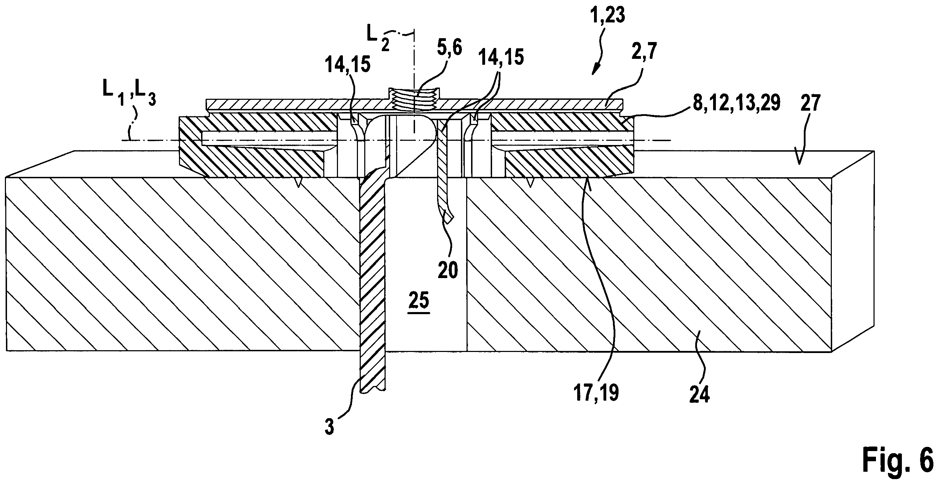

Der in den Figuren 1 bis 7 dargestellte Kippdübel 1 des ersten Ausführungsbeispiels weist einen langgestreckten Balken 2 auf, der sich in etwa quaderförmig entlang einer Balkenlängsachse L₁ erstreckt. Bezüglich der Längserstreckung steht in etwa mittig nach unten ein Band 3 ab. "Unten" bezieht sich hier stets auf die Richtung senkrecht zur Balkenlängsachse L₁ in die das Band 3 ragt. Dies entspricht beispielsweise der Einbaulage bei der Befestigung an einer Decke. "Oben" bezeichnet dementsprechend die entgegengesetzte Seite. Die Erstreckung von unten nach oben wird als "Höhe" bezeichnet, während die Erstreckung quer hierzu als "Breite" und die Richtung als "seitlich" bezeichnet wird. Das Band 3 ist ein langgestreckter Körper aus Kunststoff, auf dessen geometrische Details es im Erfindungszusammenhang nicht ankommt. Das Band 3 ist drehbeweglich über zwei Lagerzapfen 4 im Balken 2 mittig gelagert, wobei die Lagerung so gestaltet ist, dass das Band 3 zwischen einer Stellung, in der es im Wesentlichen parallel zur Balkenlängsachse L₁ steht, und einer Stellung, in der es wie in Figur 6 dargestellt senkrecht zur Balkenlängsachse L₁ steht, hin und her bewegbar ist. Figur 1 zeigt eine Zwischenstellung. Um im Weiteren die beiden Enden des Balkens 2 zu unterscheiden, wird mit "hinten" das Ende bezeichnet, zu dem das Band 3 schwenkbar ist. Mit "vorne" ist dementsprechend das andere Ende des Balkens 2 gemeint. Im Bereich der Verbindung von Band 3 und Balken 2 weist der Balken 2 eine Öffnung 5 zur Aufnahme einer nicht dargestellten Schraube auf (siehe Figur 6). Die Öffnung 5 ist als Gewindedurchgangsloch 6 ausgeführt. Die Öffnung 5 erstreckt sich entlang einer Öffnungslängsachse L₂, die senkrecht zur Balkenlängsachse L₁ von unten nach oben verläuft.

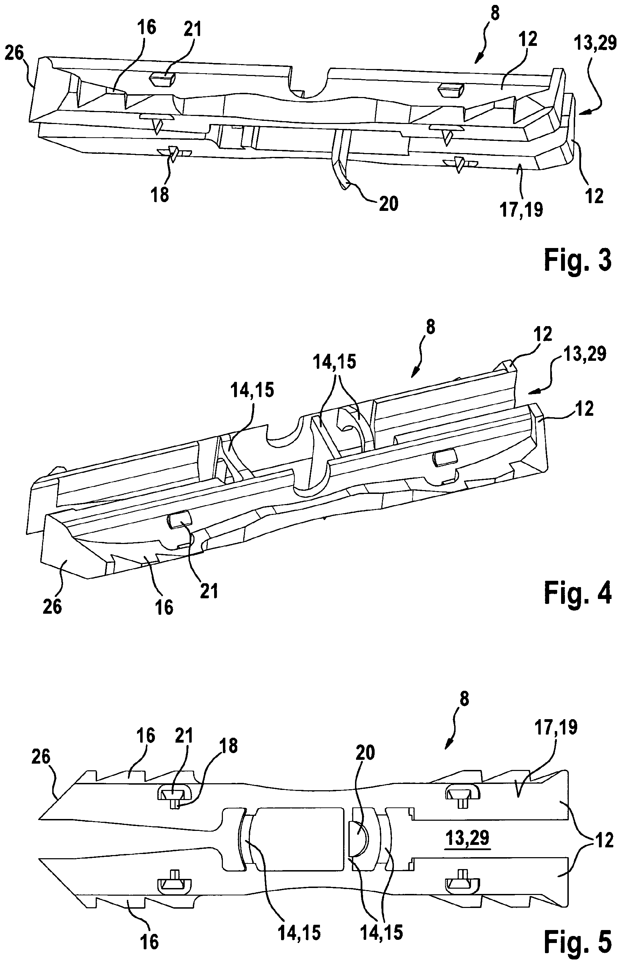

Der Balken 2 besteht aus zwei Komponenten, nämlich einem Tragkörper 7 als erste Komponente aus Stahl und einem Anlagekörper 8 als zweite Komponente aus Kunststoff. Die erste Komponente ist somit härter als die zweite Komponente. Der Tragkörper 7 hat einen im Wesentlichen U-förmigen Querschnitt, wobei die beiden Schenkel 9 nach unten weisen. Der Tragkörper 7 erstreckt sich fast über die gesamte Länge des Balkens 2 mit konstanter Breite, wohingegen die Höhe über die Länge des Balkens etwas variiert, da die Schenkel 9 unten eine wellenförmige Tragkante 10 mit zwei nach unten vorstehenden Bäuchen 11 bilden. Der Anlagekörper 8 besteht im Wesentlichen aus zwei Hälften 12, die sich spiegelsymmetrisch über die gesamte Länge des Balkens 2 erstrecken und jeweils einen in etwa L-förmigen Querschnitt aufweisen. Die Hälften 12 schmiegen sich auf der Innenseite des Tragkörpers 7 und unten an den Tragkanten 10 an. Zwischen den Hälften 12 erstreckt sich ein nach unten offener und oben durch den Tragkörper 7 begrenzter Schraubkanal 13 mit näherungsweise rechteckigem Querschnitt, wobei der Schraubkanal 13 in der unteren Hälfte etwas verengt ist. Aus den Figuren 4 und 5, die den Anlagekörper 8 schräg von oben sowie von unten zeigen, wird der Verlauf des Schraubkanals 13 von hinten nach vorne deutlich. Zunächst verläuft der Schraubkanal 13 mit gleichbleibendem Querschnitt und öffnet sich dann im mittleren Drittel auf etwa die doppelte Breite. Anschließend verengt der Schraubkanal 13 sich dann stufenartig stark, wobei er gegenüber dem hinteren Drittel nur im unteren Bereich enger ist, während der obere Bereich die gleiche Breite aufweist.

Im weiteren Verlauf, also im vorderen Drittel, öffnet sich der Querschnitt des Schraubkanals 13 wieder auf den gleichen Querschnitt wie im hinteren Drittel. Damit verengt sich der Schraubkanal 13 sowohl von vorne nach hinten als auch umgekehrt. Im mittleren Drittel sind die beiden Hälften 12 einstückig oben durch drei dünne, bogenförmige Federstege 14 verbunden. Die Federstege 14 bilden Federelemente 15, die eine Beweglichkeit der Hälften 12 aufeinander zu, also in einer Richtung quer zur Balkenlängsachse L₁, erlauben. Im vorderen und im hinteren Drittel weisen die Hälften 12 seitlich je drei Zähne 16 auf. Unten bilden die Hälften 12 eine Auflagefläche 17, die im Wesentlichen in einer Ebene liegt. Vier kleine Spitzen 18 ragen über diese Ebene hinaus nach unten. Die Auflagefläche 17 bildet eine Tragseite 19 des Balkens 2, da über sie planmäßig eine Last auf einen Untergrund übertragen wird. Da der Anlagekörper 8 sich auch unten an die Tragkanten 10 der Schenkel 9 des Tragkörpers 7 anschließt, steht der Anlagekörper 8 auf der Tragseite 19 über den Tragkörper 7 über. Außerdem steht der Anlagekörper 8, wie in Figur 2 dargestellt, seitlich über den Tragkörper 7 über, also in einer Richtung quer zur Öffnungslängsachse L₂ und quer zur Balkenlängsachse L₁.

Im Bereich der Öffnung 5 ist an einem der Federstege 14 eine Federzunge 20 angeformt, die nach unten bis über die Spitzen 18 hinausragt. Die Federzunge 20 liegt, wie in Figur 1 dargestellt, am Band 3 an, wenn dieses parallel oder schräg zum Balken 2 steht. Die Federzunge 20 bewirkt somit eine Bewegung des Bands 3 in Richtung einer senkrechten Stellung des Bands 3 zum Balken 2, wie in Figur 6 dargestellt.

Der Anlagekörper 8 ist durch je zwei Rastnasen 21 an jeder Hälfte 12 am Tragkörper 7 befestigt. Der Tragkörper 7 weist dazu kreisförmige Ausnehmungen 22 in den Schenkeln 9 auf, in die die Rastnasen 21 eingreifen.

Am Band 3 kann außerdem eine verschiebbare Hülse (nicht dargestellt) angeordnet sein, wie dies aus dem Stand der Technik bekannt ist. Da eine solche Hülse für die Erfindung nicht wesentlich ist, wird sie hier nicht beschrieben.

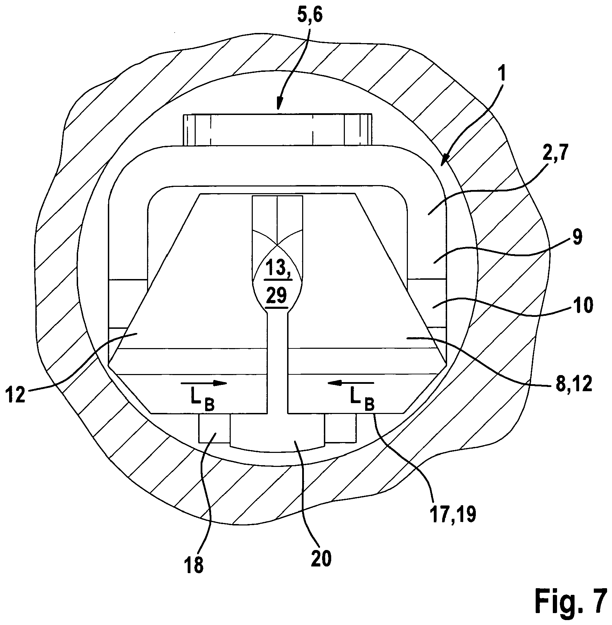

Die Verwendung und Funktion des Kippdübels 1 wird im Folgenden insbesondere anhand der Figuren 6 und 7 erläutert. Zur Erstellung einer Befestigungsanordnung 23, wie sie in Figur 6 dargestellt ist, wird im ersten Schritt in ein dünnwandiges Bauteil 24, hier eine Gipskartonplatte an einer Decke, ein Loch 25 gebohrt. Danach wird der Kippdübel 1 mit dem vorderen Ende voraus durch das Loch 25 gesteckt. Der Kippdübel 1 weist zum leichteren Einführen an seinem vorderen Ende zwei Einführschrägen 26 am Anlagekörper 8 auf. Die Einführschrägen 26 bewirken, dass die beiden Hälften 12 entgegen der Kraft der Federelemente 15 aufeinander zu bewegt werden, wie dies in Figur 7 anhand der Pfeile B dargestellt ist. Das Band 3 ist während des Einführens derart gekippt, dass es parallel zur Balkenlängsachse L₁ verläuft, also am Balken 2 anliegt. Sobald der Balken 2 das Loch 25 vollständig passiert hat, bewirkt die Federzunge 20 eine Verkippung des Balkens 2 gegenüber dem Band 3. Wird dann am Band 3 gezogen, legt sich der Balken 2 an einer dem Bediener abgewandten Rückseite 27 des dünnwandigen Bauteils 24 an, wie in Figur 6 dargestellt. Das Band 3 dient bei diesem Vorgang sowohl dem Halten als auch dem Positionieren und Manipulieren des Balkens 2. Aufgrund der Federelemente 15 bewegen sich die Hälften 12 des Anlagekörpers 8 nach dem Passieren des Lochs 25 wieder auseinander. Im Weiteren kann dann eine Hülse mit einem Kragen am Band 3 entlang bis zum Loch gezogen und das Band an der Hülse abgeschnitten werden (nicht dargestellt), wodurch die Position des Balkens 2 fixiert wird. Mittels einer Schraube (nicht dargestellt), insbesondere einer metrischen Schraube, kann schließlich ein Gegenstand (nicht dargestellt) befestigt werden, wobei die Schraube in das Gewindedurchgangsloch 6 eingeschraubt wird.

Treten hohe Lasten auf, beispielsweise bei der Befestigung einer schweren Lampe, so werden diese über die Schraube und das Gewindedurchgangsloch 6 auf den Tragkörper 7 übertragen. Der Tragkörper 7 kann aufgrund seiner material- und formbedingten Steifigkeit die auftretenden Kräfte über seine gesamte Länge verteilen und auf den Anlagekörper 8 übertragen. Da die Hälften 12 nach dem Durchdringen des Lochs 25 wieder auseinander bewegt wurden und außerdem eine große Auflagefläche 17 aufweisen, kann die Last über eine große Fläche auf der Rückseite 27 des dünnwandigen Bauteils 24 verteilt werden. Dies verringert gegenüber bekannten Kippdübeln die Gefahr des Durchbrechens. Dennoch kann es aber dazu kommen, dass sich das dünnwandige Bauteil 24 etwas durchbiegt, also wölbt. Damit es in der Folge nicht im Bereich des vorderen und hinteren Endes des Tragkörpers 7 zu Spannungsspitzen kommt, ist die Tragkante 10 vorne und hinten jeweils geneigt gegenüber der Balkenlängsachse L₁ und bildet in diesem Bereich eine schräg nach außen weisende Stützfläche 28 (Figur 1).

Bei der Verwendung des Kippdübels 1 beispielsweise im Bereich einer Decke, kann es beim Bohren des Lochs 25 dazu kommen, dass sich hinter dem dünnwandigen Bauteil 24 kein Hohlraum, sondern beispielsweise eine Lattung aus Holz als Tragkonstruktion für das dünnwandige Bauteil 24 befindet. In diesem Fall kann der Balken 2 nicht hinter dem dünnwandigen Bauteil 24 gekippt werden. Dennoch ist der Kippdübel 1 zur Befestigung verwendbar. Dazu wird der Kippdübel 1 zunächst vollständig in das Loch 25 eingeführt und das Band 3 so gekappt, dass es nicht mehr aus dem Loch 25 hervorsteht. Der zu befestigende Gegenstand kann dann aufgesetzt und eine Schraube durch eine Bohrung oder dergleichen des Gegenstandes hindurch in den Schraubkanal 13 des Kippdübels 1 eingeschraubt werden. Dies entspricht der Verwendung des Kippdübels 1 in einem Vollbaustoff wie ein Spreizdübel. Der Schraubkanal 13 kann auch als ein Schlitz 29 des Balkens 2 aufgefasst werden. Durch das Einschrauben werden die Hälften 12 auseinander gedrückt, so dass sich der Kippdübel 1 im Loch 25 verspreizt. Dadurch, dass der Schraubkanal 13 unten etwas enger ist als oben, kommt es sowohl zu einer seitlichen Verspreizung als auch zu einer Verspreizung nach unten. Durch die Verengung des Schraubkanals 13 von hinten nach vorne kann die Schraube zunächst leicht eingedreht werden und es kommt zu einer Verspreizung, die ein Mitdrehen verhindert. Gelangt die Schraube in den engeren Bereich des Schraubkanals 13, erhöht sich zwar das Drehmoment, aber auch die Verspreizung, so dass ein guter Halt erreicht wird. Die Zähne 16 sorgen ebenfalls für einen guten Halt im Loch 25. Insbesondere in einem weichen Untergrund können sie sich eindrücken.

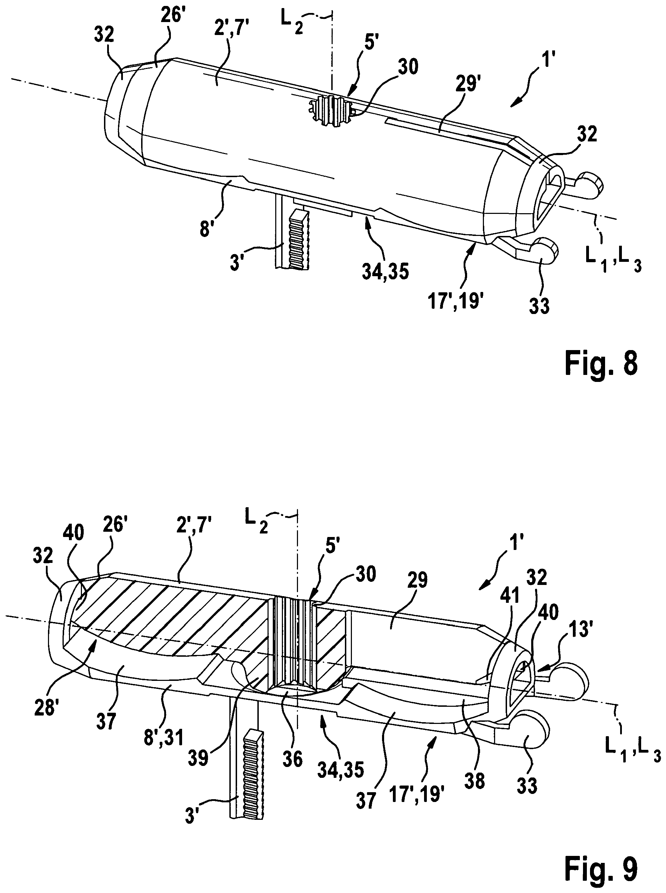

Anhand der Figuren 8 bis 10 wird im Folgenden ein Kippdübel 1' gemäß einem zweiten Ausführungsbeispiel dargestellt. Übereinstimmende Elemente werden mit entsprechenden Bezugsziffern bezeichnet. Zur Vermeidung von Wiederholungen wird vor allem auf die Unterschiede zum ersten Ausführungsbeispiel eingegangen. Beim Kippdübel 1' des zweiten Ausführungsbeispiels besteht sowohl der Anlagekörper 8' als auch der Tragkörper 7' aus Kunststoff, allerdings handelt es sich bei dem Tragkörper 7' um ein Polyamid mit Faserverstärkung, während es sich bei dem Anlagekörper 8' um ein Polyamid ohne Faserverstärkung handelt, so dass der Tragkörper 7' wiederum fester und härter als der Anlagekörper 8' ist. Das Band 3' ist einstückig mit dem Anlagekörper 8' verbunden und steht im entspannten Zustand senkrecht zur Balkenlängsachse L₁ ab. Aufgrund der Elastizität des Kunststoffs ist auch hier das Band 3' gegenüber dem Balken 2' kippbar. Der Balken 2' hat eine zylindrische Grundform, die an der Tragseite 19' zur Bildung einer Auflagefläche 17' eben abgeflacht ist. Vorne und hinten ist der Balken 2' kegelstumpfförmig geformt, so dass am vorderen Ende eine Einführschräge 26' ausgebildet ist. Die Öffnung 5' weist kein Gewinde, sondern über den Umfang verteilte und in Richtung der Öffnungslängsachse L₂ verlaufende Rippen 30 auf, die insbesondere ein leichtes Eindrehen einer selbstschneidenden Schraube erlauben.

Der Anlagekörper 8', der wie der Tragkörper 7' bezüglich einer Ebene parallel zur Balkenlängsachse L₁ und zur Öffnungslängsachse L₂ spiegelsymmetrisch ist, weist einen flachen Grundkörper 31 auf, dessen Breite und Länge der Breite beziehungsweise der Länge des Balkens 2' entspricht. Der Anlagekörper 8' überragt den Tragkörper 7' bezüglich der Länge und Breite leicht. Am vorderen und hinteren Ende steht am Anlagekörper 8' jeweils ein Bogen 32 nach oben ab. Außerdem stehen hinten in Richtung der Balkenlängsachse L₁ zwei abgerundete Laschen 33 ab. Auf der unteren Seite bildet der Anlagekörper 8' eine im Wesentlichen ebene Auflagefläche 17', wobei die Auflagefläche 17' vorne und hinten leicht schräg nach oben verläuft. In der Mitte, über etwa 30 Prozent der Länge des Balkens 2', weist die Auflagefläche 17' eine Aussparung 34 in Form eines nutartigen Rücksprungs 35 mit geringer Höhe auf. Im Bereich der Aussparung 34 ist außerdem ein kreisförmiger Durchbruch 36 angeordnet, der koaxial zur Öffnungslängsachse L₂ ausgerichtet ist. Auf der oberen Seite des Anlagekörpers 8' sind vor und hinter dem Durchbruch 36 bogenförmige, in Richtung der Balkenlängsachse L₁ langgestreckte Auflager 37 angeordnet, die bis zu den Bögen 32 reichen. Während das vordere Auflager 37 quer zur Balkenlängsachse L₁ durchgehend ausgeformt ist, wird das hintere Auflager 37 von einem nach oben überstehenden balkenartigen Steg 38 durchquert, der sich vom Durchbruch 36 bis zum hinteren Bogen 32 erstreckt.

Der Tragkörper 7' ist an seiner unteren Seite im Wesentlichen komplementär zur oberen Seite des Anlagekörpers 8' ausgebildet und liegt an diesem an, so dass sich der Tragkörper 7' und der Anlagekörper 8' zu einem im Wesentlichen massiven Balken 2 ergänzen. Aufgrund der bogenförmigen Ausbildung auf der unteren Seite bildet der Tragkörper 7' vorne und hinten schräg nach außen gewandte Stützflächen 28'. Der Tragkörper 7' weist einen Kragen 39 auf, der die Öffnung 5' entlang der Öffnungslängsachse L₂ nach unten verlängert und durch den Durchbruch 36 hindurch ragt, so dass er den Anlagekörper 8' nach unten überragt. Vorne und hinten greift der Tragkörper 7' mit jeweils einem Fortsatz 40 in die Bögen 32 ein, wodurch der Anlagekörper 8' vom Tragkörper 7' gehalten wird. Dort wo beim Anlagekörper 8' der Steg 38 angeordnet ist, erstreckt sich über die Länge des Stegs 38 im Tragkörper 7' ein Schlitz 29' über die gesamte Höhe. In den Schlitz 29' mündet von hinten eine kurze Zentrieröffnung 41.

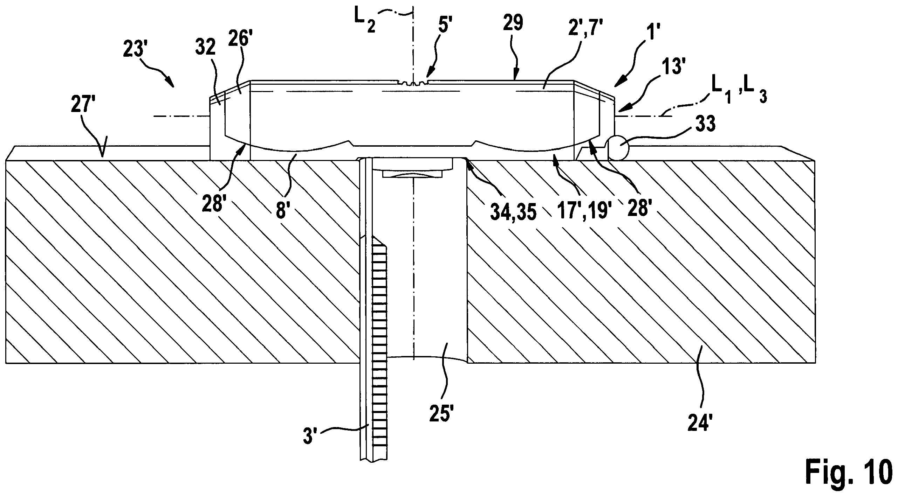

Wird der Kippdübel 1' wie in Figur 10 dargestellt bei einem dünnwandigen Bauteil 24' mit einem Hohlraum auf der Rückseite 27' verwendet, entspricht der Montagevorgang dem ersten Ausführungsbeispiel. Die Laschen 33 dienen dem besseren Kippen des Balkens 2' auf der Rückseite 27'. Da der Kragen 39 übersteht, ragt er in das Loch 25' im dünnwandigen Bauteil 24' und kann Kräfte, die quer zur Öffnungslängsachse L₂ wirken, vom Balken 2' direkt auf das dünnwandige Bauteil 24' übertragen.

Wird der Kippdübel 1', wie zuvor beim ersten Ausführungsbeispiel beschrieben, wie ein Spreizdübel in einem Vollbaustoff verwendet, so dringt die Schraube durch die Zentrieröffnung 41 in den Schlitz 29' ein, der als Schraubkanal 13' wirkt. Der Anlagekörper 8' wird dadurch nach unten gedrückt und der Tragkörper 7' verspreizt. Gegebenenfalls kann die Schraube selbstbohrend über den Schlitz 29' hinaus in den Balken 2' eingetrieben werden.

### Bezuaszeichenliste

- 1, 1': Kippdübel
- 2, 2': Balken
- 3, 3': Band
- 4: Lagerzapfen
- 5, 5': Öffnung
- 6: Gewindedurchgangsloch
- 7, 7': Tragkörper
- 8, 8': Anlagekörper
- 9: Schenkel des Tragkörpers 7
- 10: Tragkante des Tragkörpers 7
- 11: Bauch der Schenkel 9
- 12: Hälfte des Anlagekörpers 8
- 13, 13': Schraubkanal
- 14: Federsteg
- 15: Federelement
- 16: Zahn
- 17, 17': Auflagefläche
- 18: Spitze
- 19, 19': Tragseite
- 20: Federzunge
- 21: Rastnase
- 22: Ausnehmung
- 23, 23': Befestigungsanordnung
- 24, 24': dünnwandiges Bauteil
- 25, 25': Loch
- 26, 26': Einführschräge
- 27, 27': Rückseite des dünnwandigen Bauteils 24, 24'
- 28, 28': Stützfläche
- 29, 29': Schlitz
- 30: Rippen
- 31: Grundkörper des Anlagekörpers 6'
- 32: Bogen
- 33: Lasche
- 34: Aussparung
- 35: Rücksprung
- 36: Durchbruch
- 37: Auflager
- 38: Steg
- 39: Kragen
- 40: Fortsatz
- 41: Zentrieröffnung
- L₁: Balkenlängsachse
- L₂: Öffnungslängsachse
- L₃: Kanallängsachse

## Patentansprüche

1. Kippdübel (1, 1') mit einer Schraube zur Befestigung eines Gegenstandes an einem dünnwandigen Bauteil (24, 24')
- mit einem Balken (2, 2'), der zur Befestigung in ein Loch (25, 25') eingeschoben werden kann, der sich entlang einer Balkenlängsachse (L₁) erstreckt und eine Öffnung (5, 5') zur Aufnahme der Schraube aufweist, wobei die Öffnung (5, 5') sich entlang einer Öffnungslängsachse (L₂) quer zur Balkenlängsachse (L₁) erstreckt, und
- mit einem Band (3, 3'), das mit dem Balken (2, 2') verbunden ist und zum Halten und zur Positionierung des Balkens (2, 2') bei der Montage dient, wobei der Balken (2, 2') auf der dem Band (3, 3') zugewandten Seite eine Tragseite (19, 19') bildet,
**dadurch gekennzeichnet, dass** der Balken (2, 2') einen Schraubkanal (13, 13') aufweist, der sich entlang einer Kanallängsachse (L₃) erstreckt, die im Wesentlichen parallel zur Balkenlängsachse (L₁) steht, und in den eine Schraube eingetrieben, insbesondere eingeschraubt ist, derart, dass der Balken (2, 2') verspreizt ist.

2. Kippdübel nach Anspruch 1, **dadurch gekennzeichnet, dass** sich der Schraubkanal (13, 13') über mindestens ein Fünftel, insbesondere mindestens ein Drittel der Längserstreckung des Balkens (2, 2') erstreckt.

3. Kippdübel nach Anspruch 1 oder 2, **dadurch gekennzeichnet, dass** sich der Schraubkanal (13) über die gesamte Länge des Balkens (2) erstreckt.

4. Kippdübel nach einem der Ansprüche 1 bis 3, **dadurch gekennzeichnet, dass** sich der Schraubkanal (13, 13') in einer Richtung verengt.

5. Kippdübel nach einem der Ansprüche 1 bis 4, **dadurch gekennzeichnet, dass** der Balken (2, 2') einen Schlitz (29, 29') aufweist, der im Wesentlichen parallel zur Balkenlängsachse (L₁) verläuft.

6. Kippdübel nach einem der Ansprüche 1 bis 5, **dadurch gekennzeichnet, dass** eine erste Komponente des Balkens (2, 2') einen Tragkörper (7, 7') und eine zweite Komponente einen Anlagekörper (8, 8') im Bereich der Tragseite (19, 19') zur flächigen Anlage an einem dünnwandigen Bauteil (24, 24') bildet.

7. Kippdübel nach Anspruch 6, **dadurch gekennzeichnet, dass** die erste Komponente härter als die zweite Komponente ist.

8. Kippdübel nach Anspruch 6 oder 7, **dadurch gekennzeichnet, dass** der Schraubkanal (13, 13') zumindest teilweise vom Anlagekörper (8, 8') gebildet wird.

9. Kippdübel nach einem der Ansprüche 6 bis 8, **dadurch gekennzeichnet, dass** der Schraubkanal (13') zwischen dem Anlagekörper (8') und dem Tragkörper (7') angeordnet ist.

10. Kippdübel nach einem der Ansprüche 6 bis 9, **dadurch gekennzeichnet, dass** der Anlagekörper (8, 8') zumindest in den äußeren beiden Dritteln der Längserstreckung des Balkens (2, 2') in Richtung der Öffnungslängsachse (L₂) auf der Tragseite (19, 19') über den Tragkörper (7, 7') übersteht.

11. Kippdübel nach einem der Ansprüche 6 bis 10, **dadurch gekennzeichnet, dass** der Anlagekörper (8) aus mindestens zwei Teilen, insbesondere zwei Hälften (12), besteht

12. Kippdübel nach Anspruch 11, **dadurch gekennzeichnet, dass** die Teile, insbesondere die beiden Hälften (12), in einer Richtung quer zur Balkenlängsachse (L₁) zueinander beweglich sind.

13. Kippdübel nach Anspruch 11 oder 12, **dadurch gekennzeichnet, dass** die Teile, insbesondere die beiden Hälften (12), insbesondere einstückig, über ein Federlement (15) miteinander verbunden sind.

14. Kippdübel nach einem der Ansprüche 6 bis 13, **dadurch gekennzeichnet, dass** der Tragkörper (7) zumindest abschnittsweise einen U-förmigen Querschnitt aufweist.

15. Kippdübel nach einem der vorstehenden Ansprüche, **dadurch gekennzeichnet, dass** zumindest ein Ende des Balkens (2, 2') eine Einführschräge (26, 26') aufweist.

## Claims

1. Toggle fixing (1, 1') having a screw for fixing an article to a thin-walled building component (24, 24'),
- having a crosspiece (2, 2') which, for fixing, can be pushed into a hole (25, 25') and which extends along a crosspiece longitudinal axis (L₁) and has an opening (5, 5') for receiving the screw, the opening (5, 5') extending along an opening longitudinal axis (L₂) transversely with respect to the crosspiece longitudinal axis (L₁), and
- having a strip (3, 3') which is connected to the crosspiece (2, 2') and serves for holding and positioning the crosspiece (2, 2') during mounting, the crosspiece (2, 2') forming a supporting side (19, 19') on the side facing towards the strip (3, 3'),
**characterised in that** the crosspiece (2, 2') has a screw channel (13, 13') which extends along a channel longitudinal axis (L₃) that is substantially parallel to the crosspiece longitudinal axis (L₁), and into which a screw is driven, especially screwed, in such a way that the crosspiece (2, 2') is expanded.

2. Toggle fixing according to claim 1, **characterised in that** the screw channel (13, 13') extends over at least a fifth, especially at least a third, of the longitudinal extent of the crosspiece (2, 2').

3. Toggle fixing according to claim 1 or 2, **characterised in that** the screw channel (13) extends over the entire length of the crosspiece (2).

4. Toggle fixing according to any one of claims 1 to 3, **characterised in that** the screw channel (13, 13') narrows in one direction.

5. Toggle fixing according to any one of claims 1 to 4, **characterised in that** the crosspiece (2, 2') has a slot (29, 29') which runs substantially parallel to the crosspiece longitudinal axis (L₁).

6. Toggle fixing according to any one of claims 1 to 5, **characterised in that** a first component of the crosspiece (2, 2') forms a supporting body (7, 7') and a second component forms a contact body (8, 8') in the region of the supporting side (19, 19') for planar contact with a thin-walled building component (24, 24').

7. Toggle fixing according to claim 6, **characterised in that** the first component is harder than the second component.

8. Toggle fixing according to claim 6 or 7, **characterised in that** the screw channel (13, 13') is formed at least partly by the contact body (8, 8').

9. Toggle fixing according to any one of claims 6 to 8, **characterised in that** the screw channel (13') is arranged between the contact body (8') and the supporting body (7').

10. Toggle fixing according to any one of claims 6 to 9, **characterised in that** the contact body (8, 8'), at least in the two outer thirds of the longitudinal extent of the crosspiece (2, 2'), projects beyond the supporting body (7, 7') on the supporting side (19, 19') in the direction of the opening longitudinal axis (L₂).

11. Toggle fixing according to any one of claims 6 to 10, **characterised in that** the contact body (8) consists of at least two parts, especially two halves (12).

12. Toggle fixing according to claim 11, **characterised in that** the parts, especially the two halves (12), are movable relative to one another in a direction transverse with respect to the crosspiece longitudinal axis (L₁).

13. Toggle fixing according to claim 11 or 12, **characterised in that** the parts, especially the two halves (12), are connected to one another, especially integrally, by way of a resilient element (15).

14. Toggle fixing according to any one of claims 6 to 13, **characterised in that** the supporting body (7) has, at least in some regions, a U-shaped cross-section.

15. Toggle fixing according to any one of the preceding claims, **characterised in that** at least one end of the crosspiece (2, 2') has an insertion slope (26, 26').

## Revendications

1. Cheville à bascule (1, 1') munie d'une vis dévolue à la fixation d'un objet à un composant structurel (24, 24') à paroi mince, comprenant
- une barrette (2, 2') qui peut être insérée dans un trou (25, 25') en vue de la fixation, s'étend le long d'un axe longitudinal (L₁), et est percée d'une ouverture (5, 5') conçue pour recevoir ladite vis, laquelle ouverture (5, 5') s'étend le long d'un axe longitudinal (L₂), transversalement par rapport à l'axe longitudinal (L₁) de ladite barrette, et
- une languette (3, 3') reliée à la barrette (2, 2') et servant à la retenue et au positionnement de ladite barrette (2, 2') au cours du montage, laquelle barrette (2, 2') forme une face de support (19, 19') du côté tourné vers ladite languette (3, 3'),
**caractérisée par le fait que** la barrette (2, 2') est dotée d'un canal de vissage (13, 13') qui s'étend le long d'un axe longitudinal (L₃) disposé, pour l'essentiel, parallèlement à l'axe longitudinal (L₁) de ladite barrette, et dans lequel une vis est enfoncée, notamment vissée de telle sorte que ladite barrette (2, 2') soit déployée.

2. Cheville à bascule selon la revendication 1, **caractérisée par le fait que** le canal de vissage (13, 13') s'étend sur au moins un cinquième, en particulier sur au moins un tiers de l'étendue longitudinale de la barrette (2, 2').

3. Cheville à bascule selon la revendication 1 ou 2, **caractérisée par le fait que** le canal de vissage (13) s'étend sur toute la longueur de la barrette (2).

4. Cheville à bascule selon l'une des revendications 1 à 3, **caractérisée par le fait que** le canal de vissage (13, 13') se rétrécit dans une direction.

5. Cheville à bascule selon l'une des revendications 1 à 4, **caractérisée par le fait que** la barrette (2, 2') comporte une fente (29, 29') s'étendant, pour l'essentiel, parallèlement à l'axe longitudinal (L₁) de ladite barrette.

6. Cheville à bascule selon l'une des revendications 1 à 5, **caractérisée par le fait qu'**un premier élément constitutif de la barrette (2, 2') forme un corps de support (7, 7') et un second élément constitutif forme un corps (8, 8') de venue en applique, dans la région de la face de support (19, 19'), en vue du contact à plat contre un composant structurel (24, 24') à paroi mince.

7. Cheville à bascule selon la revendication 6, **caractérisée par le fait que** le premier élément constitutif est plus dur que le second élément constitutif.

8. Cheville à bascule selon la revendication 6 ou 7, **caractérisée par le fait que** le canal de vissage (13, 13') est formé, au moins en partie, par le corps (8, 8') de venue en applique.

9. Cheville à bascule selon l'une des revendications 6 à 8, **caractérisée par le fait que** le canal de vissage (13') est interposé entre le corps (8') de venue en applique et le corps de support (7').

10. Cheville à bascule selon l'une des revendications 6 à 9, **caractérisée par le fait que** le corps (8, 8') de venue en applique fait saillie au-delà du corps de support (7, 7') sur la face de support (19, 19'), au moins dans les deux tiers extérieurs de l'étendue longitudinale de la barrette (2, 2'), dans la direction de l'axe longitudinal (L₂) de l'ouverture.

11. Cheville à bascule selon l'une des revendications 6 à 10, **caractérisée par le fait que** le corps (8) de venue en applique est composé d'au moins deux parties, notamment de deux moitiés (12).

12. Cheville à bascule selon la revendication 11, **caractérisée par le fait que** les parties, notamment les deux moitiés (12), sont douées de mobilité relative dans une direction transversale par rapport à l'axe longitudinal (L₁) de la barrette.

13. Cheville à bascule selon la revendication 11 ou 12, **caractérisée par le fait que** les parties et notamment les deux moitiés (12) sont reliées l'une à l'autre, en particulier d'un seul tenant, par l'intermédiaire d'un élément élastique (15).

14. Cheville à bascule selon l'une des revendications 6 à 13, **caractérisée par le fait que** le corps de support (7) est muni, au moins par zones, d'une section transversale configurée en U.

15. Cheville à bascule selon l'une des revendications précédentes, **caractérisée par le fait qu'**au moins une extrémité de la barrette (2, 2') est pourvue d'un biseau d'introduction (26, 26').
